# EUROPÄISCHE PATENTSCHRIFT

(11) **EP 2 687 622 B1**
(45) Veröffentlichungstag und Bekanntmachung des Hinweises auf die Patenterteilung: **23.05.2018**
(21) Anmeldenummer: 12176884.0
(22) Anmeldetag: 18.07.2012
(51) Int. Cl.: H01M 4/06, H01M 4/24, H01M 4/42, H01M 4/62, H01M 2/02, H01M 4/48, H01M 4/58, H01M 4/90, H01M 6/04, H01M 12/06

(54) **ZINK-ZELLEN MIT VERBESSERTER ANODENZUSAMMENSETZUNG**
ZINC CELLS WITH IMPROVED ANODE COMPOSITION
CELLULES DE ZINC AYANT UNE COMPOSITION D'ANODES AMÉLIORÉE

(43) Veröffentlichungstag der Anmeldung: 22.01.2014
(60) Teilanmeldung: 16195852.5
(73) Patentinhaber: VARTA Microbattery GmbH, 73479 Ellwangen (DE)
(72) Erfinder: Csrenko, Cornelia, 73433 Aalen (DE); Kreidler, Bernd, 73479 Ellwangen (DE); Kohls, Ulrich, 73433 Aalen (DE); Löffelmann, Hermann, 73479 Ellwangen (DE); Rupp, Andreas, 73565 Spraitbach (DE)
(74) Vertreter: Patentanwaltskanzlei Cartagena

(56) Entgegenhaltungen:
- EP-A1- 0 048 009
- EP-A1- 1 717 890
- US-A- 2 994 625
- US-A1- 2005 244 714
- US-A1- 2008 008 937
- US-B1- 6 183 900
- US-B2- 7 300 721

## Beschreibung

Die vorliegende Erfindung betrifft elektrochemische Zellen, insbesondere in Knopfzellenform, umfassend eine Elektrode, die sich im Wesentlichen aus Zink- oder aus einer Zinklegierung zusammensetzt.

Elektrochemische Zellen mit einer Elektrode aus Zink oder aus einer Zinklegierung (kurz: Zinkelektrode) finden vielseitige Anwendung. ZinkElektroden sind Bestandteil von Zink-Luft-Zellen, die in Knopfzellenform insbesondere im Hörgerätebereich benötigt werden. Weitere Beispiele für Zellen mit Zinkanode sind Zink-Manganoxid-Zellen, Zink-Silberoxid-Zellen und von Zink-Quecksilberoxid-Zellen. All diese Zellen zeichnen sich durch einen hohen Energiegehalt und eine relativ stabile Spannungslage aus.

Elektroden aus Zink kommen weiterhin auch in Gaserzeugerzellen zum Einsatz. Ein Beispiel einer Gaserzeugerzelle ist in der DE 3532335 A1 beschrieben.

Aus der US 2008/0008937 A1 ist eine alkalische Primärbatterie mit einer Zinkanode bekannt. Dem Elektrolyten dieser Batterie können verschiedene Additive zugesetzt sein, unter anderem auch Aluminiumhydroxid. Das Aluminiumhydroxid wird zugesetzt, um die Löslichkeit eines elektrochemisch aktiven Materials im Elektrolyten der Primärbatterie zu begrenzen oder sogar zu senken.

In der US 2005/0244714 A1 sind Zinkanoden beschrieben, die ein Tricalciumaluminat enthalten. Bei einem Aluminat handelt es sich bekanntlich um ein gelöstes Hydroxid. Das Aluminat wird zugesetzt, um die Kapazität der Zinkanoden zu optimieren.

In der US 7300721 B2 ist die Rede von Aluminatzusätzen sowie weiteren Zusätzen zu einem Elektrolyten. Die Zusätze sollen einer Dendritenbildung vorbeugen.

In der Entgegenhaltung EP 0048009 A1 ist ein Additiv für eine Zinkelektrode beschrieben, das unter anderem auch Calciumaluminat als Bestandteil eines Zements umfasst.

Der vorliegenden Erfindung lag die Aufgabe zugrunde, elektrochemische Zellen mit einer Zinkelektrode bereit zu stellen, die sich durch ein besonders stabiles Spannungsprofil, insbesondere bei gepulster Entladung, auszeichnen.

Diese Aufgabe wird gelöst durch die elektrochemische Zelle mit den Merkmalen des Anspruchs 1. Bevorzugte Ausführungsformen der erfindungsgemäßen Zelle sind in den abhängigen Ansprüchen 2 bis 4 angegeben.

Überraschenderweise wurde gefunden, dass sich die gestellte Aufgabe lösen lässt, indem man den Zinkelektroden gattungsgemäßer elektrochemischer Zellen einen Anteil an Aluminiumhydroxid zusetzt. Erfindungsgemäße elektrochemische Zellen enthalten mindestens eine Elektrode, die sich im Wesentlichen aus Zink oder aus einer Zinklegierung zusammensetzt und die einen Anteil an Aluminiumhydroxid und/oder an mindestens einem Aluminat aufweist.

Bei Aluminiumhydroxid handelt es sich bekanntlich um einen bei Raumtemperatur festen Stoff von üblicherweise weißer Färbung, der in Wasser grundsätzlich schlecht löslich bis unlöslich ist. Aluminiumhydroxid existiert in mehreren Modifikationen. Erfindungsgemäß lassen sich sowohl die bekannten Modifikationen von Aluminiumorthohydroxid Al(OH)₃ (γ-Aluminium, β-Aluminiumhydroxid und triklines Aluminiumhydroxid) einsetzen als auch bekannte Modifikationen von Aluminiummetahydroxid AIO(OH), nämlich orthorhombisches α-Aluminiumoxidhydroxid und orthorhombisches γ-Aluminiumoxidhydroxid.
Alle diese Modifikationen reagieren unter Einfluss von Basen zu Aluminaten, in denen Aluminium in Form eines komplexen Anions [Al(OH)₄]⁻ mit Hydroxidionen als Liganden vorliegt.
Wahlweise ist es möglich, dass die Zinkelektroden an Stelle des Aluminiumhydroxids oder zusätzlich zu diesem einen Anteil an mindestens einem Aluminat enthalten. In Frage kommen hierfür insbesondere als Aluminate Alkalialuminate wie Natriumaluminat oder Kaliumaluminat, Erdalkalialuminate wie Calziumaluminat sowie Zinkaluminat. Diese können separat oder in Kombination miteinander in der negativen Elektrode einer erfindungsgemäßen elektrochemischen Zelle vorliegen. Die Elektrode enthält neben dem Zink oder der Zinklegierung sowie dem Aluminiumhydroxid und/oder dem mindestens einem Aluminat mehrere weitere Komponenten. Die Elektrode weist einen Elektrodenbinder auf. Bei der Wahl des Elektrodenbinders kann auf kommerziell erhältliche Produkte zurückgegriffen werden. Dem Fachmann ist bekannt, welche Elektrodenbinder für elektrochemische Zellen mit Zinkelektroden geeignet sind.
Besonders bevorzugt kommt vorliegend ein Binder auf Basis von Carboxymethylcellulose und/oder auf Basis eines Carboxymethylcellulose-Derivats zum Einsatz. Alternativ können auch Binder auf Basis von Polyacrylsäuren verwendet werden.

Als weitere zusätzliche Komponente enthält die Elektrode ein leitfähigkeitsverbesserndes Additiv. Hierbei kann es sich beispielsweise um ein kohlenstoffbasiertes Leitmittel handeln, beispielsweise um Ruß, Graphit oder Kohlenstoffnanoröhrchen (CNTs). Zusätzlich oder an
Stelle des kohlenstoffbasierten Leitmittels kann auch ein alternatives Leitmittel, beispielsweise partikuläres Kupfer, verwendet werden.

Gegebenenfalls weist die Elektrode einen Korrosionsinhibitor auf. Unter einem Korrosionsinhibitor soll vorliegend ein Additiv verstanden werden, dass der Selbstkorrosion des in der Elektrode enthaltenen Zinks entgegenwirkt, welche wiederum eine unerwünschte Wasserstoffbildung zur Folge haben kann. Klassisch wurde in Zinkelektroden zu diesem Zweck häufig metallisches Quecksilber verwendet. Dieses wurde aus Umweltschutzgründen in den vergangenen Jahren jedoch durch Ersatzadditive, beispielsweise durch Indium und Bismuth, verdrängt.

Erfindungsgemäß weist die Elektrode die folgenden Komponenten in den folgenden Anteilen auf:
- das Zink und/oder die Zinklegierung in einem Anteil zwischen 95 Gew.-% und 99,5 Gew.-%, insbesondere zwischen 97,5 Gew.-% und 99,5 Gew.-%,
- das Aluminiumhydroxid und/oder das mindestens eine Aluminat in einem Anteil zwischen 0,1 Gew.-% und 2 Gew.-%,
- der Elektrodenbinder in einem Anteil zwischen 0,1 Gew.-% und 2,5 Gew.-%,
- das leitfähigkeitsverbessernde Additiv in einem Anteil zwischen 0,25 Gew.-% und 2,5 Gew.-%,
- den Korrosionsinhibitor in einem Anteil zwischen 0 Gew.-% und 2,5 Gew.-%,

Hierbei ist zu beachten, dass in der Elektrode die genannten Anteile derart aufeinander abgestimmt sind, dass sie sich insgesamt zu 100 Gew.-% aufsummieren. Weiterhin ist hervorzuheben, dass sich alle Gewichtsangaben auf das Trockengewicht der Elektrode beziehen, also ohne Berücksichtigung eines Elektrolyten, mit dem die Elektrode gegebenenfalls getränkt ist.

Hervorzuheben ist weiterhin, dass es sich bei dem Korrosionsinhibitor um ein rein fakultatives Merkmal der erfindungsgemäßen Zelle handelt.

Besonders bevorzugt weist die erfindungsgemäße Zelle einen alkalischen Elektrolyten auf. Gängige alkalische Elektrolyten sind beispielsweise wässrige Natriumhydroxid- oder Kaliumhydroxid-Lösungen.

Im Lichte der obigen Ausführungen zum chemischen Einfluss von Basen auf Aluminiumhydroxid ist klar, dass bei Anwesenheit eines alkalischen Elektrolyten in einer erfindungsgemäßen Zelle enthaltenes Aluminiumhydroxid mindestens teilweise in ein oder mehrere Aluminate umgewandelt wird. So können sich beispielsweise unter dem Einfluss von Kalilauge als Base in einer Zink und Aluminiumhydroxid enthaltenden Elektrode gleichzeitig Kalium- und Zinkaluminate bilden.

Bei der sich im Wesentlichen aus Zink oder aus einer Zinklegierung zusammensetzenden, einen Anteil an Aluminiumhydroxid und/oder an mindestens einem Aluminat aufweisenden Elektrode handelt es sich um die negative Elektrode der erfindungsgemäßen Zelle.

In besonders bevorzugten Ausführungsformen weist die erfindungsgemäße Zelle eine Luftkathode, eine Silberoxidkathode, eine Quecksilberoxidkathode oder eine Manganoxidkathode auf. Es handelt sich entsprechend bei der erfindungsgemäßen Zelle bevorzugt um eine Zink-Luft-Zelle, eine Zink-Silberoxid-Zelle, eine Quecksilberoxid-Zink-Zelle oder eine Zink-Manganoxid-Zelle. Der Aufbau all dieser Zelltypen ist dem Fachmann bekannt und bedarf vorliegend keiner detaillierten Erläuterung.

Die erfindungsgemäße Zelle kann auch eine Wasserstoffkathode umfassen, wie sie beispielsweise in der DE 3532335 C2 beschrieben ist. Bei der erfindungsgemäßen Zelle kann es sich also auch um eine Gaserzeugerzelle, insbesondere eine Wasserstofferzeugungszelle, handeln.

Besonders bevorzugt handelt es sich bei der erfindungsgemäßen Zelle um eine Knopfzelle.

Zur Herstellung der beschriebenen Elektrode werden ein Zinkpulver oder ein zinkhaltiges Pulver (aus einer Zinklegierung) mit Aluminiumhydroxid (alternativ: Zusätzlich oder an Stelle des Aluminiumhydroxids mit einem Aluminat) gemischt. Weiterhin werden der erwähnte Elektrodenbinder und das leitfähigkeitsverbessernde Additiv sowie gegebenenfalls der Korrosionsinhibitor zugesetzt.

Die entstehende Mischung kann anschließend zu einem Formkörper gepresst und als Elektrode in ein Gehäuse eingesetzt werden. Alternativ ist es auch möglich, die Mischung pulverförmig in ein Gehäuse einzubringen (einzurieseln). Diese Variante ist insbesondere bei der Herstellung von Zink/Luft-Zellen bevorzugt.

In der Regel wird die negative Elektrode mit einem alkalischen Elektrolyten versetzt, nachdem sie in das genannte Gehäuse eingebracht wurde Anschließend kann das Gehäuse flüssigkeitsdicht verschlossen werden.

Es ist aber auch möglich, die Mischung außerhalb des Gehäuses mit dem Elektrolyten zu versetzen und als Paste in das Gehäuse einzubringen.

Weitere Merkmale und auch Vorteile der vorliegenden Erfindung ergeben sich aus der nun folgenden Beschreibung eines Ausführungsbeispiels. Einzelne der oben oder in den Ansprüchen beschriebenen Merkmale können dabei jeweils für sich oder zu mehreren in Kombination miteinander bei einer Ausführungsform der Erfindung verwirklicht sein. Die Ausführungsbeispiele dienen lediglich zur Erläuterung und zum besseren Verständnis der Erfindung und sind in keiner Weise einschränkend zu verstehen.

### Ausführungsbeispiel

Aus Zinkpulver, Aluminiumhydroxid und Carboxymethylcellulose als Elektrodenbinder wurden Elektroden für Zink-Luft-Zellen, Zink-Silberoxid-Zellen und Wasserstofferzeugerzellen hergestellt. Hierzu wurden die genannten Elektrodenbestandteile in den folgenden Verhältnissen miteinander gemischt:

| | Zink/Luft | Zink/Ag₂O | Zink-H₂ |
|---|---|---|---|
| Elektrodenbinder | 0,3 Gew.-% | 1,0 Gew.-% | 1,5 Gew.-% |
| Al(OH)₃ | 0,5 Gew.-% | 1,0 Gew.-% | 0,5 Gew.-% |
| Zink-Pulver | 99,2 Gew.-% | 98,0 Gew.-% | 98,0 Gew.-% |

Die Mischung für die Zink-Silberoxid-Zelle wurden zu einer tablettenförmigen Elektrode verpresst und als negative Elektrode in einem handelsüblichen Knopfzellengehäuse verbaut.

Die Mischungen für die Zink-Luft- und die Wasserstofferzeugerzellen wurden in trockener Form in einen Knopfzellendeckel eingerieselt. Dieser wurde anschließend mit einem Becher kombiniert, der Ein- bzw. Austrittsöffnungen für Luftsauerstoff und Wasserstoff aufwies.

Vor dem Schließen der Gehäuse wurden die hergestellten Elektroden jeweils mit 30%-iger Kaliumhydroxid-Lösung getränkt.

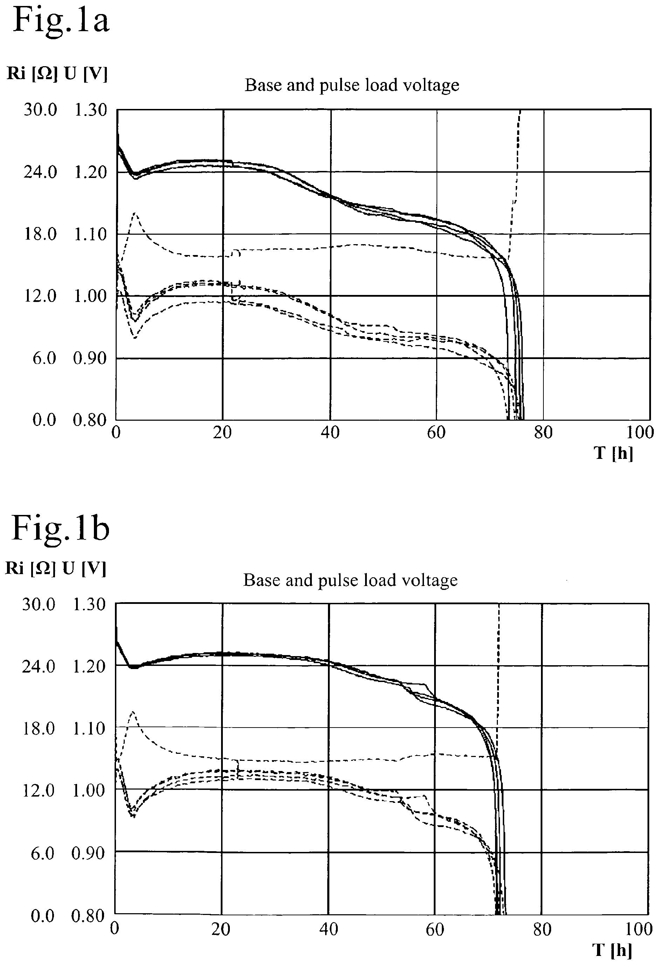

Tests mit so hergestellten Zink-Luftzellen haben ergeben, dass sich bei einer gepulsten Widerstandsentladung im Vergleich zu Referenzzellen deutlich verbesserte Spannungslagenwerte ergeben. Die Spannungsprofile einer erfindungsgemäßen Zink-Luftzelle sowie einer Referenzzelle bei einer gepulsten Widerstandsentladung sind in den Figuren 1a und 1b dargestellt, wobei Figur 1a die Spannungscharakteristik der Referenzzelle, 1b die der erfindungsgemäßen Zelle abbildet.

Weiterhin zeigten die erfindungsgemäßen Zellen eine deutlich verbesserte Lagerbeständigkeit: Nach einem Monat Lagerung wurden die Kapazitäten von erfindungsgemäßen Zellen gemessen:

| | | 1,10 V | | | 1,05 V | | |
|---|---|---|---|---|---|---|---|
| | Ch. | t [h] | Q [mAh] | A [mWh] | t [h] | Q [mAh] | A [mWh] |
| | 21 | 178,0 | 282,0 | 349,4 | 179,6 | 286,9 | 354,8 |
| | 22 | 192,8 | 290,5 | 359,0 | 193,9 | 293,6 | 362,5 |
| | 23 | 192,8 | 290, 3 | 359,0 | 194, 0 | 294,0 | 362,9 |
| | 30 | 179,7 | 287,1 | 355,2 | 193,4 | 292,3 | 360,9 |
| | 67 | 192,9 | 290,8 | 360,0 | 194,0 | 294,0 | 363,4 |
| | | | | | | | |
| Mean | | 187,2 | 288, 1 | 356,5 | 191,0 | 292,2 | 360,9 |
| Std. dev. | | 6,9 | 3,4 | 3,9 | 5, 7 | 2, 7 | 3,2 |

Für Referenzzellen wurden die folgenden Vergleichswerte bestimmt:

| | | 1,10 V | | | 1,05 V | | |
|---|---|---|---|---|---|---|---|
| | Ch. | t[h] | Q[mAh] | A[mWh] | t[h] | Q[mAh] | A[mWh] |
| | 73 | 170,0 | 258,0 | 319,5 | 172,0 | 264,0 | 326,2 |
| | 74 | 176,0 | 276,0 | 343,4 | 178,0 | 282,0 | 350,0 |
| | 75 | 172,0 | 264,0 | 328,6 | 174,0 | 270,0 | 335,3 |
| | 76 | 174,0 | 270,0 | 335,4 | 176,0 | 276,0 | 342,0 |
| | 77 | 172,0 | 264,0 | 327,7 | 174,0 | 270,0 | 334,4 |
| | | | | | | | |
| Mean | | 172,8 | 266,4 | 330,9 | 174,8 | 272,4 | 337,6 |
| Std. dev. | | 2,0 | 6,1 | 8,0 | 2, 0 | 6,1 | 8, 0 |

## Patentansprüche

1. Elektrochemische Zelle umfassend eine negative Elektrode, die sich im Wesentlichen aus Zink oder aus einer Zinklegierung zusammensetzt und einen Anteil an Aluminiumhydroxid und/oder an mindestens einem Aluminat aufweist, **dadurch gekennzeichnet, dass** die Elektrode die folgenden Komponenten in den folgenden Anteilen aufweist:
- das Zink und/oder die Zinklegierung in einem Anteil zwischen 95 Gew.-% und 99,5 Gew.-%,
- das Aluminiumhydroxid und/oder das mindestens eine Aluminat in einem Anteil zwischen 0,1 Gew.-% und 2 Gew.-%,
- der Elektrodenbinder in einem Anteil zwischen 0,1 Gew.-% und 2,5 Gew.-%,
- das leitfähigkeitsverbessernde Additiv in einem Anteil zwischen 0,25 Gew.-% und 2,5 Gew.-%,
- den Korrosionsinhibitor in einem Anteil zwischen 0 Gew.-% und 2,5 Gew.-%,
wobei die Anteile so aufeinander abgestimmt sind, dass sie sich insgesamt zu 100 Gew.-% aufsummieren und wobei sich alle Gewichtsangaben auf das Trockengewicht der Elektrode beziehen.

2. Zelle nach Anspruch 1, **dadurch gekennzeichnet, dass** das mindestens eine Aluminat mindestens ein Mitglied aus der Gruppe mit Natriumaluminat, Kaliumaluminat, Calziumaluminat und Zinkaluminat umfasst.

3. Zelle nach Anspruch 1 oder Anspruch 2, **dadurch gekennzeichnet, dass** sie einen alkalischen Elektrolyten aufweist.

4. Zelle nach einem der vorhergehenden Ansprüche, **dadurch gekennzeichnet, dass** sie eine Luftkathode, eine Silberoxid-Kathode, eine Quecksilberoxid-Kathode oder eine Wasserstoffkathode aufweist.

## Claims

1. Electrochemical cell comprising a negative electrode which is composed substantially of zinc or a zinc alloy and comprises a proportion of aluminium hydroxide and/or of at least one aluminate, **characterized in that** the electrode comprises the following components in the following proportions:
- the zinc and/or the zinc alloy in a proportion of from 95% by weight to 99.5% by weight,
- the aluminium hydroxide and/or the at least one aluminate in a proportion of from 0.1% by weight to 2% by weight,
- the electrode binder in a proportion of from 0.1% by weight to 2.5% by weight,
- the conductivity-improving additive in a proportion of from 0.25% by weight to 2.5% by weight,
- the corrosion inhibitor in a proportion of from 0% by weight to 2.5% by weight,
where the proportions are such that they add up to a total of 100% by weight and all proportions by weight are based on the dry weight of the electrode.

2. Cell according to Claim 1, **characterized in that** the at least one aluminate comprises at least one member of the group consisting of sodium aluminate, potassium aluminate, calcium aluminate and zinc aluminate.

3. Cell according to Claim 1 or Claim 2, **characterized in that** it comprises an alkaline electrolyte.

4. Cell according to any of the preceding claims, **characterized in that** it comprises an air cathode, a silver oxide cathode, a mercury oxide cathode or a hydrogen cathode.

## Revendications

1. Pile électrochimique, comprenant une électrode négative qui est composée essentiellement de zinc ou d'un alliage de zinc et qui présente une proportion d'hydroxyde d'aluminium et/ou d'au moins un aluminate, **caractérisée en ce que** l'électrode présente les composants suivants aux proportions suivantes :
- le zinc et/ou l'alliage de zinc en une proportion entre 95% en poids et 99,5% en poids,
- l'hydroxyde d'aluminium et/ou ledit au moins un aluminate en une proportion entre 0,1% en poids et 2% en poids,
- le liant d'électrode en une proportion entre 0,1% en poids et 2,5% en poids,
- un additif améliorant la conductibilité en une proportion entre 0,25% en poids et 2,5% en poids,
- l'inhibiteur de corrosion en une proportion entre 0% en poids et 2,5% en poids,
les proportions étant adaptées les unes aux autres de manière telle que leur somme représente, au total, 100% en poids et toutes les indications de poids se rapportant au poids sec de l'électrode.

2. Pile selon la revendication 1, **caractérisée en ce que** ledit au moins un aluminate comprend au moins un élément du groupe formé par l'aluminate de sodium, l'aluminate de potassium, l'aluminate de calcium et l'aluminate de zinc.

3. Pile selon la revendication 1 ou la revendication 2, **caractérisée en ce qu'**elle présente un électrolyte alcalin.

4. Pile selon l'une quelconque des revendications précédentes, **caractérisée en ce qu'**elle présente une cathode à air, une cathode à base d'oxyde d'argent, une cathode à base d'oxyde de mercure ou une cathode à base d'hydrogène.
